# EUROPÄISCHE PATENTSCHRIFT

(11) **EP 3 935 679 B1**
(45) Veröffentlichungstag und Bekanntmachung des Hinweises auf die Patenterteilung: **18.12.2024**
(21) Anmeldenummer: 20708404.7
(22) Anmeldetag: 25.02.2020
(51) Int. Cl.: H01M 50/50

(54) **VORRICHTUNG ZUM PARALLELSCHALTEN MEHRERER, BEZÜGLICH EINER FÜGEACHSE PARALLEL ZUEINANDER ANGEORDNETER BATTERIEZELLEN**
APPARATUS FOR CONNECTING IN PARALLEL A PLURALITY OF BATTERY CELLS WHICH ARE ARRANGED PARALLEL TO ONE ANOTHER WITH RESPECT TO A JOINING AXIS
DISPOSITIF POUR LE BRANCHEMENT EN PARALLÈLE DE PLUSIEURS CELLULES DE BATTERIE DISPOSÉES EN PARALLÈLE LES UNES AVEC LES AUTRES PAR RAPPORT À UN AXE D'ASSEMBLAGE

(30) Priorität: 08.03.2019 AT 501882019
(43) Veröffentlichungstag der Anmeldung: 12.01.2022
(73) Patentinhaber: John Deere Electric Powertrain LLC, Moline, IL 61265 (US)
(72) Erfinder: WALDSCHÜTZ, Gerhard, 4240 Freistadt (AT); SCHMUDERMAIER, Wolfgang, 3862 Eisgarn (AT); DREXLER, Florian, 4240 Freistadt (AT); KASTLER, Helmut, 4240 Freistadt (AT)
(74) Vertreter: Hübscher & Partner Patentanwälte GmbH
(86) Internationale Anmeldenummer: PCT/AT2020/060054
(87) Internationale Veröffentlichungsnummer: WO 2020/181308

(56) Entgegenhaltungen:
- EP-A1- 3 096 372
- CN-A- 101 719 540
- US-A1- 2009 104 516

## Beschreibung

### Technisches Gebiet

Die Erfindung bezieht sich auf eine Vorrichtung zum Parallelschalten mehrerer, bezüglich einer Fügeachse parallel zueinander angeordneter Batteriezellen mit einem, einzelne Durchbrüche aufweisenden Kontaktblech.

### Stand der Technik

Aus dem Stand der Technik sind Vorrichtungen zum Parallelschalten von Batteriezellen bekannt (EP3096372A1), bei denen einzelne, bezüglich einer Fügeachse parallel angeordnete Batteriezellen von Kontaktfedern unter Vorspannung mantelseitig umgriffen werden. Zur Parallelschaltung der einzelnen Batteriezellen werden die Kontaktfedern mit einem Kontaktblech stoffschlüssig verbunden. Obwohl diese lösbare, kraftschlüssige Verbindung zwischen den Batteriezellen und den Kontaktfedern den Vorteil einer einfachen Assemblierung und einer Austauschbarkeit defekter Batteriezellen mit sich bringt, ergibt sich dennoch der Nachteil, dass die für eine sichere elektrische und mechanische Kontaktierung der Batteriezellen erforderlichen Klemmkräfte den Assembliervorgang insofern erschweren, als es beim Fügen der Batteriezellen in die Kontaktfedern zu Beschädigungen des Batteriemantels und/oder der oxidationshindernden Beschichtung der Kontaktfedern kommt. Daraus ergeben sich hinsichtlich der möglichen Batteriezellendurchmesser und damit der nutzbaren Leistungsdichte konstruktive Beschränkungen, insbesondere für den Fall, dass die Batteriezellen und damit die Kontaktfedern mechanischen Belastungen wie beispielsweise Schwingungen ausgesetzt sind, was bei einer üblichen scharfkantigen Ausgestaltung der Kontaktzungen zu einer sukzessiven Beschädigung des Batteriezellenmantels und/oder der oxidationshindernden Beschichtung der Kontaktfedern führt. Darüber hinaus ergibt sich aufgrund der variierenden Kontaktflächen zwischen den Kontaktzungen und des Batteriezellenmantels ein veränderlicher Kontaktwiderstand, was ungünstige elektrische Betriebsbedingungen mit sich bringt. Aus diesem Grunde werden üblicherweise stoffschlüssige Verbindungen zwischen den Kontaktfedern und den Batteriezellen bevorzugt.

Um auch bei schwer zugänglichen Kontaktstellen daher eine stoffschlüssige Verbindung zu erreichen, wurde bereits vorgeschlagen (US6120564, EP2007833442) auf den Kontaktfedern Schweißpunkte vorzusehen, die eine stoffschlüssige Verbindung beim Anlegen eines entsprechend hohen Stromes ermöglichen. Nachteilig ist daran allerdings in nachvollziehbarer Weise, dass, abgesehen von den Einschränkungen bei der Assemblierung und der fehlenden Tauschbarkeit defekter Batteriezellen, die beim Schweißen auftretenden Ströme und Temperaturen zu einer Beschädigung der Batteriezellen führen können. Eine Vorrichtung zum Parallelschalten mehrerer, bezüglich einer Fügeachse parallel zueinander angeordneter Batteriezellen ist aus CN101719540 A bekannt.

### Darstellung der Erfindung

Der Erfindung liegt somit die Aufgabe zugrunde eine Vorrichtung der eingangs beschriebenen Art so auszugestalten, dass eine unter periodischen mechanischen Belastungen zuverlässige und dennoch lösbare Parallelschaltung einzelner Batteriezellen unabhängig von ihrem Durchmesser und ihrer relativen Lage zum Kontaktblech ermöglicht wird, wobei ein einfacher Assembliervorgang beibehalten und eine konstruktiv flexiblere serielle Verschaltung der Batteriezellen ermöglicht werden kann.

Die Erfindung löst die gestellte Aufgabe dadurch, dass jeder Durchbruch zum mantelseitigen Umschließen der Batteriezellen ausgebildet ist und wenigstens eine in den Durchbruch vorragende Kontaktzunge mit einem durchbruchsseitig von der Kontaktzunge aufragenden Kontaktkörper in Form eines geschnittenen Ovoides aufweist. Im Gegensatz zu einer aus dem Stand der Technik bekannten Kontaktfeder, die je nach relativer Lage eine unbestimmbare Kontaktfläche mit der vom Durchbruch umschlossenen Batteriezelle aufweisen würde, wird durch das erfindungsgemäße Vorsehen eines Kontaktkörpers in Form eines geschnittenen Ovoides, vorzugsweise in Form einer Hemisphäre, die Berührungsfläche zwischen der Kontaktfeder und dem Mantel vorgegeben, sodass sich ein definierter Kontaktwiderstand zwischen dem Kontaktkörper bzw. der Kontaktfeder und der Batteriezelle ergibt. Dieser Kontaktwiderstand ist selbst bei einer mechanischen Verformung der Vorrichtung zufolge von Vibrationen weitgehend konstant. Aufgrund der konvexen Oberfläche der Kontaktkörper kann darüber hinaus eine Oberflächenbeschädigung vermieden werden, zumal die Kontaktkörper die scharfkantigen Kontaktzungen vom jeweiligen Oberflächenmantel der Batteriezellen trennen. Die Ausgestaltung der Erfindung bietet weiters den Vorteil, dass das Kontaktblech an einer beliebigen Position entlang der Füge- und Längsachse der Batteriezellen angeordnet werden kann, sodass sich hinsichtlich der seriellen Verschaltung der einzelnen Batteriezellen größere Gestaltungsmöglichkeiten ergeben. In einer fertigungsgünstigen Ausgestaltung können die Kontaktzungen in Richtung der Fügeachse der Batteriezellen gebogene Abschnitte des Kontaktblechs sein. Dies bedeutet, dass zur besseren elektrischen Leitfähigkeit der Vorrichtung Kontaktblech und Kontaktzungen aus einem einzigen Stück Metall geformt werden.

Zur Verbesserung des elektrischen Kontakts bei gleichzeitig einfachen Herstellungsbedingungen wird des Weiteren vorgeschlagen, den Kontaktkörper aus den Kontaktzungen zu drücken. Dadurch können die Kontaktkörper in einem Arbeitsschritt hergestellt werden, wobei die abgerundete Oberfläche zur Vermeidung von Oberflächenbeschädigungen ohne eine gesonderte Nachbearbeitung erreicht werden kann. Zur Verringerung des Fremdschichtwiderstandes können die Kontaktkörper mit einer oxidationshindernden Beschichtung versehen sein. Eine solche Beschichtung kann in einer besonders vorteilhaften Ausgestaltung der Erfindung dadurch hergestellt werden, dass die Kontaktzungen vor dem Drücken der Kontaktkörper bereits mit einer für den Fachmann hinreichenden Beschichtungsdicke versehen sind, sodass nach dem Umformen die in die Durchbrüche vorragenden Kontaktkörperoberflächen eine geschlossene oxidationshindernde Beschichtung aufweisen. Als Beschichtungen können etwa Nickel oder Gold als Oxidationsschutz zur Senkung des Fremdschichtwiderstandes eingesetzt werden.

Da besonders in der Fahrzeugkonstruktion Leistungsgewichte und Energiedichten eine hohe Rolle spielen, wird vorgeschlagen, dass die kreisförmigen Durchbrüche des Kontaktbleches gemäß einer dichtesten Kreispackung unter Ausbildung von zwischen je drei Durchbrüchen liegenden Zwickeln angeordnet sind. Für den Fachmann versteht sich dabei, dass eine dichteste Kreispackung von Durchbrüchen im Sinne der Erfindung das Verbleiben eines Verbindungssteges zwischen den einzelnen Batteriezellen bzw. Durchbrüchen erfordert, dessen Breite den Materialeigenschaften und der geforderten mechanischen Stabilität anzupassen ist. An den sich zwischen jeweils drei Durchbrüchen ergebenden Zwickeln ergibt sich zufolge der vorgeschlagenen Konstruktion ein verstärkter Kontaktblechabschnitt, der zur Einleitung von Klemmkräften in das Kontaktblech genützt werden kann und der sich aufgrund seiner strukturellen Festigkeit bevorzugt zur Positionierung der Kontaktzungen eignet. Dadurch lässt sich auch die mechanische Vorspannung und Lage der Kontaktzungen abhängig vom eingesetzten Batterietyp anpassen, da die Kontaktstelle zwischen Kontaktzunge und Leitungsblech räumlich freier gewählt werden kann.

Um die Batteriezellen kraftschlüssig und symmetrisch mit dem Kontaktblech zu verklemmen, können pro Durchbruch wenigstens zwei, vorzugsweise wenigstens drei umfangsseitig äquidistante Kontaktzungen vorgesehen sein. Dadurch wird die stabilisierende Klemmkraft auf die Batterie erhöht, der symmetrische Kraftschluss vermindert die mechanische Spannung zwischen Batteriemodulen und Kontaktblech und es wird eine kraftschlüssige Lagerung auch bei Beschädigung einzelner Kontaktzungen ermöglicht. Ein weiterer resultierender Effekt ist eine strapazierfähigere elektrische Verbindung zwischen Batteriezellenmantel und Kontaktblech, da auch hier insbesondere im Fall einer mechanischen Beschädigung einer Kontaktzunge eine kontinuierliche elektrische Verbindung geschaffen werden kann.

Um eine besonders günstige Krafteinleitung der Klemmkräfte in das Kontaktblech zu erreichen, wird vorgeschlagen, dass jede Kontaktzunge eines von sechs Durchbrüchen umgebenden Durchbruches einen Zwickel begrenzt, der auch von je einer Kontaktzunge zweier umliegender Durchbrüche begrenzt wird. Durch diese Anordnung wird die Vorrichtung in Richtung der Fügeachse der Batteriemodule, also im Wesentlichen orthogonal zur Ebene des Parallelblechs, ausgesteift, wodurch sich zusätzlich zu verbesserten elektrischen Leitungseigenschaften durch die erhöhte Anzahl an Kontaktzungen pro Durchbruch als Synergieeffekt die mechanische Stabilität der Anordnung erhöht, zumal sich die in den Kontaktblechabschnitt eines Zwickels eingeleiteten Kräfte der Kontaktzungen vektoriell aufheben. Es versteht sich dabei für den Fachmann, dass dieses Muster in einem Kontaktblech nicht beliebig fortgesetzt werden kann, sodass die Durchbrüche von Randbereichen, die nicht von sechs Durchbrüchen umgeben werden, dem obigen Kennzeichen nicht mehr genügen müssen. Eine besonders materialsparende und fertigungseffiziente Ausgestaltung der erfindungsgemäßen Vorrichtung ergibt sich, wenn je Durchbruch genau drei Kontaktzungen vorgesehen sind, womit an jeden zweiten Zwickel jeweils drei Kontaktzungen angrenzen, während die jeweils ersten Zwickel frei bleiben. Ein solches Abfolgemuster kann in besonders einfacher Weise auch durch Parallelverschieben eines erzeugenden Durchbruches mit drei Kontaktfedern in der Kontaktblechebene erzeugt werden. Je nach Bedarf und Anwendung kann das Kontaktblech durch die Anzahl der Kontaktzungen pro Durchbruch dadurch mehr oder weniger elastisch bzw. starr gegenüber Biege- und Torsionsspannungen ausgelegt werden.

Zur weiteren Verbesserung der Stabilität der erfindungsgemäßen Vorrichtung wird vorgeschlagen, dass der Randbereich des Kontaktblechs wenigstens fünfmal breiter ausgeformt ist als die schmalste Stelle zwischen zwei Durchbrüchen.

### Kurze Beschreibung der Erfindung

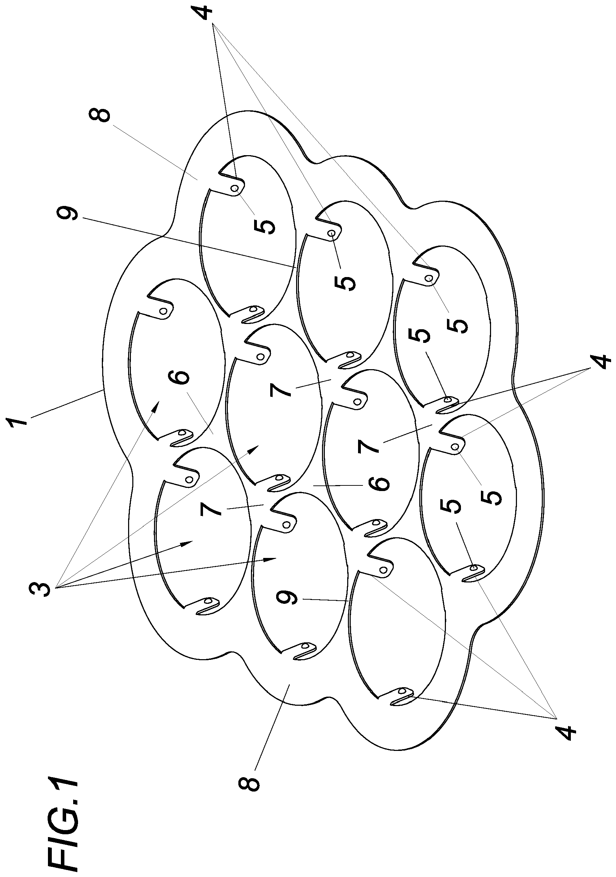

In der Zeichnung ist der Erfindungsgegenstand beispielsweise dargestellt. Es zeigen
- Fig. 1: eine perspektivische Darstellung der erfindungsgemäßen Vorrichtung,

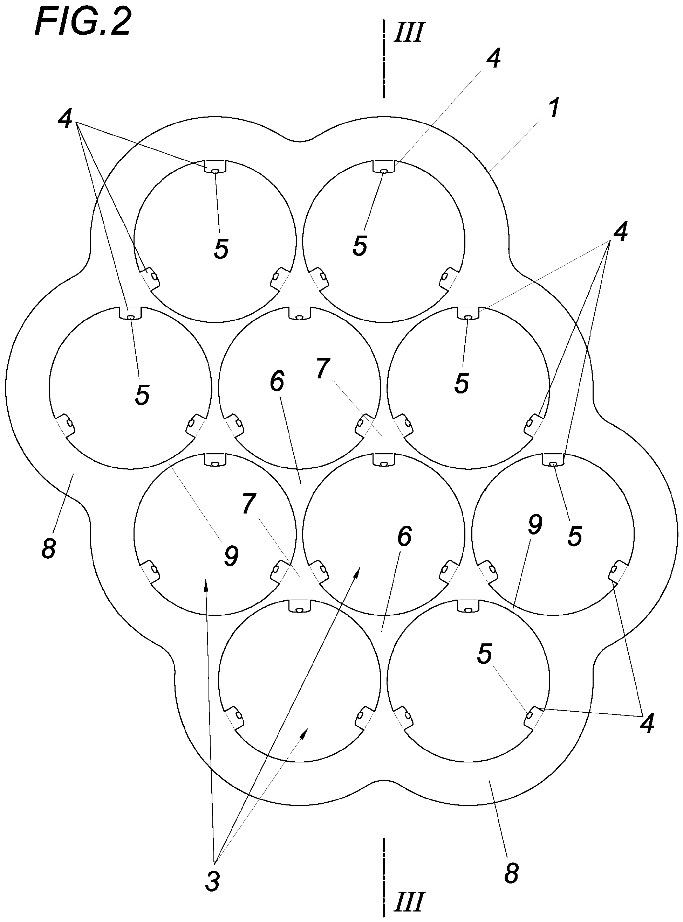

- Fig. 2: eine Draufsicht auf die erfindungsgemäße Vorrichtung in einem größeren Maßstab und

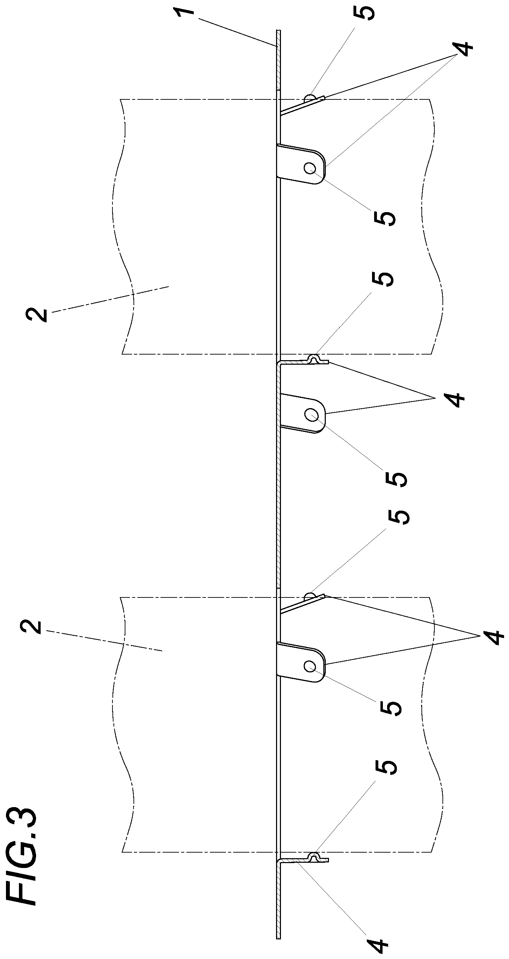

- Fig. 3: einen Schnitt entlang der Linie III-III der Fig. 2 in einem noch größeren Maßstab mit angedeuteten eingesetzten Batteriezellen.

### Wege zur Ausführung der Erfindung

Eine erfindungsgemäße Vorrichtung weist ein Kontaktblech 1 auf. In dem Kontaktblech 1 können Batteriezellen 2 in Durchbrüchen 3 gelagert und über Kontaktzungen 4, die Kontaktkörper 5 aufweisen, kraftschlüssig und parallel elektrisch leitend verbunden werden.

Die Kontaktkörper 5 sind so ausgestaltet, dass unter periodischer mechanischer Belastung und Änderung der relativen Position zwischen Kontaktblech 1 und Batteriezelle 2 die Kontaktfläche zwischen Kontaktkörper 5 und Batteriezelle 2 weitgehend konstant bleibt, was erfindungsgemäß durch die Gestaltung der Kontaktkörper 5 als geschnittene Ovoide, vorzugsweise als Hemisphären erreicht wird.

Die Durchbrüche 3 des Kontaktblechs 1 sind gemäß einer dichtesten Kreispackung angeordnet. Zusammen mit der erfindungsgemäßen Anordnung der Kontaktzungen 4 ergeben sich dadurch zwischen jeweils drei Durchbrüchen 3 liegende Zwickel 6, 7. Im Falle von drei Kontaktzungen 4 je Durchbruch 3, die umfangsseitig äquidistant und in einem Winkel von 120° zueinander angeordnet sind, ergeben sich somit einerseits Zwickel 6 an die keine Kontaktzungen 4 anschließen und Zwickel 7, an die unter Ausbildung einer mechanischen Aussteifung Kontaktzungen 4 der umliegenden Durchbrüche 3 anschließen. Bei der dargestellten Vorrichtung wechseln sich somit Zwickel 6 ohne Kontaktzungen 4 mit Zwickeln 7 mit Kontaktzungen 4 jeweils ab.

Der Randbereich 8 des Kontaktblechs 1 kann aus Stabilitätsgründen mindestens fünfmal so breit ausgeformt sein wie die schmalste Stelle 9 zwischen zwei Durchbrüchen 3.

## Patentansprüche

1. Vorrichtung zum Parallelschalten mehrerer, bezüglich einer Fügeachse parallel zueinander angeordneter Batteriezellen (2) mit einem, einzelne Durchbrüche (3) aufweisenden Kontaktblech (1), **dadurch gekennzeichnet, dass** jeder Durchbruch (3) zum mantelseitigen Umschließen der Batteriezellen (2) ausgebildet ist und wenigstens eine Kontaktzunge (4) umfasst, die durchbruchsseitig einen von der Kontaktzunge (4) in den Durchbruch (3) vorragenden Kontaktkörper (5) in Form eines geschnittenen Ovoides aufweist.

2. Vorrichtung nach Anspruch 1, **dadurch gekennzeichnet, dass** die Kontaktkörper (5) aus den Kontaktzungen (4) gedrückt sind.

3. Vorrichtung nach Anspruch 1 oder 2, **dadurch gekennzeichnet, dass** die kreisförmigen Durchbrüche (3) des Kontaktbleches (1) gemäß einer dichtesten Kreispackung unter Ausbildung von zwischen je drei Durchbrüchen (3) liegenden Zwickeln (6,7) angeordnet sind.

4. Vorrichtung nach einem der Ansprüche 1 bis 3, **dadurch gekennzeichnet, dass** die Durchbrüche (3) jeweils wenigstens drei umfangsseitig äquidistant zueinander angeordnete Kontaktzungen (4) aufweisen.

5. Vorrichtung nach Anspruch 4, **dadurch gekennzeichnet, dass** jede Kontaktzunge (4) eines von sechs Durchbrüchen (3) umgebenden Durchbruches (3) einen Zwickel (7) begrenzt, der auch von je einer Kontaktzunge (4) zweier umliegender Durchbrüche (3) begrenzt wird.

6. Vorrichtung nach einem der Ansprüche 1 bis 5 **dadurch gekennzeichnet, dass** der Randbereich (8) des Kontaktblechs (1) wenigstens fünfmal breiter ausgeformt ist als die schmalste Stelle (9) zwischen zwei Durchbrüchen (3).

## Claims

1. A device for connecting in parallel multiple battery cells (2) arranged in parallel to one another with respect to a joining axis with a contact plate (1) having individual passages (3), **characterized in that** each passage (3) is designed for the jacket-side enclosure of the battery cells (2) and comprises at least one contact tongue (4), which has on the passage side a contact body (5) protruding from the contact tongue (4) into the passage (3) in the form of a cut ovoid.

2. The device according to claim 1, **characterized in that** the contact bodies (5) are pressed out of the contact tongues (4).

3. The device according to claim 1 or 2, **characterized in that** the circular passages (3) of the contact plate (1) are arranged according to a densest circle packing with formation of spandrels (6, 7) lying between each three passages (3).

4. The device according to any one of claims 1 to 3, **characterized in that** the passages (3) each have at least three contact tongues (4) arranged circumferentially equidistant to one another.

5. The device according to claim 4, **characterized in that** each contact tongue (4) of one passage (3) surrounded by six passages (3) delimits a spandrel (7) which is also delimited by one contact tongue (4) of each of two surrounding passages (3).

6. The device according to any one of claims 1 to 5, **characterized in that** the edge region (8) of the contact plate (1) is formed at least five times wider than the narrowest point (9) between two passages (3).

## Revendications

1. Dispositif pour monter en parallèle plusieurs cellules de batterie (2) disposées parallèlement entre elles par rapport à un axe de jonction, comportant une tôle de contact (1) présentant des perforations (3), **caractérisé en ce que** chaque perforation (3) est configurée pour entourer au niveau de leur enveloppe les cellules de batterie (2) et comprend au moins une languette de contact (4) qui présente au niveau de la perforation un élément de contact (5) en forme d'ovoïde coupé faisant saillie de la languette de contact (4) dans la perforation (3).

2. Dispositif selon la revendication 1, **caractérisé en ce que** les éléments de contact (5) sont pressés hors des languettes de contact (4).

3. Dispositif selon la revendication 1 ou 2, **caractérisé en ce que** les perforations circulaires (3) de la tôle de contact (1) sont disposées selon un empilement de cercles de densité maximum en formant des goussets (6, 7) entre chaque groupe de trois perforations (3).

4. Dispositif selon une des revendications 1 à 3, **caractérisé en ce que** les perforations circulaires (3) présentent chacune au moins trois languettes de contact (4) disposées de façon équidistante entre elles sur la périphérie.

5. Dispositif selon la revendication 4, **caractérisé en ce que** chaque languette de contact (4) d'une perforation (3) entourée de six perforations (3) délimite un gousset (7) qui est également délimité par une languette de contact (4) de deux perforations (3) contiguës.

6. Dispositif selon une des revendications 1 à 5, **caractérisé en ce que** la zone périphérique (8) de la tôle de contact (1) est conformée de façon au moins cinq fois plus large que l'endroit le plus étroit (9) entre deux perforations (3).
